# EUROPEAN PATENT APPLICATION

(11) **EP 4 832 469 A1**
(43) Date of publication of application: **28.10.2026**
(21) Application number: 26173791.0
(22) Date of filing: 21.04.2026
(51) Int. Cl.: H04N 1/00, G06F 3/041, G06F 3/044

(54) **DISPLAY INPUT DEVICE CAPABLE OF SUPPRESSING LOWERING OF DETECTION ACCURACY OF TOUCH OPERATION DUE TO NOISE, IMAGE PROCESSING APPARATUS, AND UPDATE METHOD**

(30) Priority: 23.04.2025 JP 2025071051
(71) Applicant: KYOCERA Document Solutions Inc., Osaka-shi, Osaka 540-8585 (JP)
(72) Inventor: Maruhashi, Ken, Osaka-shi, 540-8585 (JP)
(74) Representative: Plougmann Vingtoft a/s

(57) **Abstract**

A display input device includes a first output portion, a first determination portion, a first detection portion, and a first update portion. The first output portion outputs a first electric signal corresponding to a capacitance of a first detection area included in a first operation surface. The first determination portion determines whether or not there is a detection target in contact with or close to the first detection area based on the first electric signal output from the first output portion and a predetermined first reference value. The first detection portion detects a predetermined first operation different from an operation on the first operation surface. The first update portion updates, when the first operation is detected by the first detection portion, the first reference value based on the first electric signal output from the first output portion.

## Description

### BACKGROUND

The present disclosure relates to a display input device, an image processing apparatus, and an update method.

There is known an image processing apparatus such as a multifunction peripheral equipped with a display input device including a touch panel. For example, the display input device includes an output portion and a determination portion. The output portion outputs an electric signal corresponding to a capacitance of a detection area included in an operation surface of the touch panel. The determination portion determines whether or not there is a detection target such as a finger that is in contact with or close to the detection area based on the electric signal output from the output portion and a predetermined reference value.

### SUMMARY

A display input device according to an aspect of the present disclosure includes a first output portion, a first determination portion, a first detection portion, and a first update portion. The first output portion outputs a first electric signal corresponding to a capacitance of a first detection area included in a first operation surface. The first determination portion determines whether or not there is a detection target in contact with or close to the first detection area based on the first electric signal output from the first output portion and a predetermined first reference value. The first detection portion detects a predetermined first operation different from an operation on the first operation surface. The first update portion updates, when the first operation is detected by the first detection portion, the first reference value based on the first electric signal output from the first output portion.

An image processing apparatus according to another aspect of the present disclosure includes the display input device and one or both of an image reading portion and an image forming portion. The image reading portion reads image data of a document sheet. The image forming portion forms an image that is based on image data.

An update method according to another aspect of the present disclosure is executed in a display input device including a first output portion which outputs a first electric signal corresponding to a capacitance of a first detection area included in a first operation surface, and a first determination portion which determines whether or not there is a detection target in contact with or close to the first detection area based on the first electric signal output from the first output portion and a predetermined first reference value, and includes: detecting a predetermined first operation different from an operation on the first operation surface; and updating, when the first operation is detected, the first reference value based on the first electric signal output from the first output portion.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a cross-sectional view showing a configuration of an image forming apparatus according to an embodiment of the present disclosure;
Fig. 2 is a block diagram showing a system configuration of the image forming apparatus according to the embodiment of the present disclosure;
Fig. 3 is a diagram showing a configuration of an operation display portion of the image forming apparatus according to the embodiment of the present disclosure; and
Fig. 4 is a flowchart showing an example of reference value update processing executed by the image forming apparatus according to the embodiment of the present disclosure.

### DETAILED DESCRIPTION

Hereinafter, an embodiment of the present disclosure will be described with reference to the attached drawings. It is noted that the following embodiment is an example of embodying the present disclosure and does not limit the technical scope of the present disclosure.

### [Configuration of image forming apparatus 1]

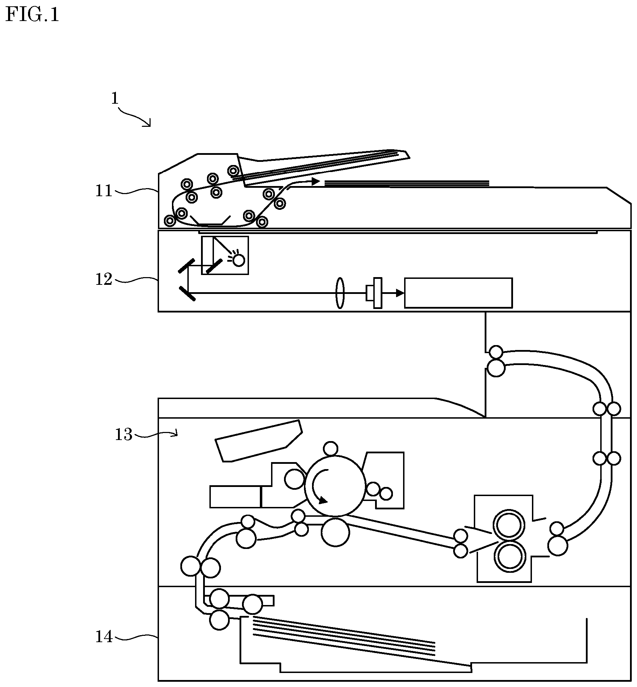

First, a configuration of an image forming apparatus 1 according to the embodiment of the present disclosure will be described with reference to Fig. 1 to Fig. 3.

The image forming apparatus 1 is a multifunction peripheral having a plurality of functions such as a facsimile function and a copying function in addition to a scanning function for reading image data from a document sheet and a printing function for forming an image based on image data. The image forming apparatus 1 is an example of an image processing apparatus according to the present disclosure. It is noted that the image processing apparatus according to the present disclosure may be a scanner, a printer, a facsimile apparatus, a copying machine, or the like.

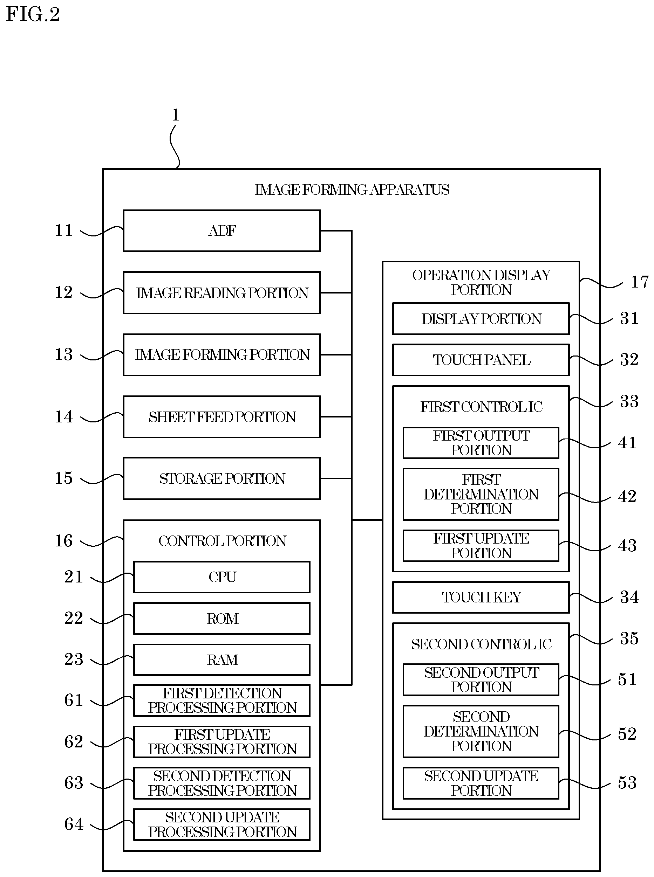

As shown in Fig. 1 and Fig. 2, the image forming apparatus 1 includes an ADF (Auto Document Feeder) 11, an image reading portion 12, an image forming portion 13, a sheet feed portion 14, a storage portion 15, a control portion 16, and an operation display portion 17.

The ADF 11 conveys a document sheet to be read by the scanning function. For example, the ADF 11 includes a document sheet setting portion, a plurality of conveying rollers, a document sheet holder, and a sheet discharge portion.

The image reading portion 12 realizes the scanning function. For example, the image reading portion 12 includes a document sheet table, a light source, a plurality of mirrors, an optical lens, and a CCD (Charge Coupled Device).

The image forming portion 13 realizes the printing function. For example, the image forming portion 13 forms an image on a sheet supplied from the sheet feed portion 14 by electrophotography. For example, the image forming portion 13 includes a photoconductor drum, a charging roller, a laser scanning device, a developing device, a transfer roller, a cleaning device, a fixing device, and a sheet discharge tray.

The sheet feed portion 14 supplies sheets to the image forming portion 13. For example, the sheet feed portion 14 includes a sheet feed cassette, a manual feed tray, a sheet conveying path, and a plurality of conveying rollers.

The storage portion 15 is a non-volatile storage device. For example, the storage portion 15 is a non-volatile memory such as a flash memory.

The control portion 16 collectively controls the image forming apparatus 1. As shown in Fig. 2, the control portion 16 includes a CPU 21, a ROM 22, and a RAM 23. The CPU 21 is a processor that executes various types of arithmetic processing. The ROM 22 is a non-volatile storage device in which information such as control programs for causing the CPU 21 to execute various types of processing is stored in advance. The RAM 23 is a volatile or non-volatile storage device that is used as a temporary storage memory (working area) for the various types of processing to be executed by the CPU 21. The CPU 21 executes the various control programs stored in advance in the ROM 22 to collectively control the image forming apparatus 1. It is noted that the control portion 16 may be a sub-control portion provided separately from a main control portion that collectively controls the image forming apparatus 1.

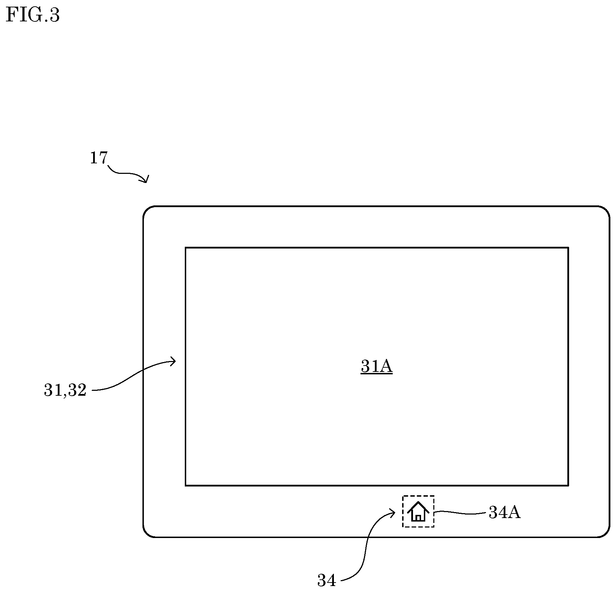

The operation display portion 17 is a user interface of the image forming apparatus 1. As shown in Fig. 2 and Fig. 3, the operation display portion 17 includes a display portion 31, a touch panel 32, a first control IC 33, a touch key 34, and a second control IC 35.

The display portion 31 is a display device that displays various types of information in response to control instructions from the control portion 16. For example, the display portion 31 is a liquid crystal display. The display portion 31 includes a display surface 31A (see Fig. 3) on which a screen is displayed.

The touch panel 32 is provided while being superimposed on the display surface 31A. The touch panel 32 includes a plurality of first electrodes arranged on a back side of the display surface 31A.

The first control IC 33 is an electronic circuit that controls the touch panel 32. As shown in Fig. 2, the first control IC 33 includes a first output portion 41, a first determination portion 42, and a first update portion 43.

The first output portion 41 outputs a first electric signal corresponding to a capacitance of a first detection area included in the display surface 31A(an example of a first operation surface according to the present disclosure).

The first detection area is an area of the display surface 31A that opposes the first electrode. The display surface 31A includes a plurality of the first detection areas corresponding to the plurality of first electrodes.

The first output portion 41 periodically outputs a plurality of the first electric signals corresponding to the plurality of first detection areas.

The first determination portion 42 determines whether or not there is a detection target in contact with or close to the first detection area based on the first electric signal output from the first output portion 41 and a predetermined first reference value.

For example, the detection target is a finger of a user of the image forming apparatus 1.

For example, when a difference between a voltage of the first electric signal corresponding to any of the first detection areas and the first reference value exceeds a predetermined first threshold value, the first determination portion 42 determines that there is a detection target in contact with or close to the first detection area. On the other hand, when the difference between the voltage of the first electric signal corresponding to any of the first detection areas and the first reference value is equal to or less than the first threshold value, the first determination portion 42 determines that there is no detection target in contact with or close to the first detection area. The first threshold value only needs to be set based on the difference between the voltage of the first electric signal corresponding to the first detection area in a case where the detection target is not in contact with or close to the first detection area and the voltage of the first electric signal corresponding to the first detection area in a case where the detection target is in contact with or close to the first detection area.

The first determination portion 42 determines whether or not there is a detection target in contact with or close to the first detection area for each of the first detection areas, based on the plurality of first electric signals corresponding to the plurality of first detection areas, that are output from the first output portion 41. Then, the first determination portion 42 notifies the control portion 16 of the determination result for each of the first detection areas. The control portion 16 determines whether or not a touch operation is being performed on the display surface 31A and a position of the touch operation, based on the determination result for each of the first detection areas, that is notified by the first determination portion 42.

The first update portion 43 updates the first reference value based on the first electric signal output from the first output portion 41.

For example, the first update portion 43 updates the first reference value when instructed to update the first reference value by the control portion 16. For example, the control portion 16 instructs the first control IC 33 to update the first reference value at a timing when no touch operation is being performed on the touch panel 32, such as at a time of activation of the image forming apparatus 1.

For example, the first update portion 43 updates the first reference value based on the plurality of first electric signals corresponding to the plurality of first detection areas, that are output from the first output portion 41, immediately after being instructed by the control portion 16 to update the first reference value. For example, the first update portion 43 sets an average value of the voltages of the first electric signals as the first reference value to be updated to.

It is noted that the first update portion 43 may set the voltage of the first electric signal having the highest (or lowest) voltage among the plurality of first electric signals as the first reference value to be updated to. Further, the first reference value may be set for each of the first detection areas. In this case, the first update portion 43 only needs to update, based on the first electric signal corresponding to any of the first detection areas, the first reference value corresponding to that first detection area.

The touch key 34 is provided outside the display surface 31A in the operation display portion 17. For example, the touch key 34 is a home key that is used to display a home screen.

The touch key 34 includes an operation surface 34A shown in Fig. 3. It is noted that the operation surface 34A is indicated by a dashed line in Fig. 3. The touch key 34 also includes a second electrode arranged on a back side of the operation surface 34A. It is noted that the touch key 34 may include a plurality of the second electrodes.

The second control IC 35 is an electronic circuit that controls the touch key 34. As shown in Fig. 2, the second control IC 35 includes a second output portion 51, a second determination portion 52, and a second update portion 53.

The second output portion 51 outputs a second electric signal corresponding to a capacitance of a second detection area included in the operation surface 34A (an example of a second operation surface according to the present disclosure).

The second detection area is an area of the operation surface 34A that opposes the second electrode.

The second output portion 51 periodically outputs the second electric signal corresponding to the second detection area.

The second determination portion 52 determines whether or not there is a detection target in contact with or close to the second detection area based on the second electric signal output from the second output portion 51 and a predetermined second reference value.

For example, when a difference between a voltage of the second electric signal output from the second output portion 51 and the second reference value exceeds a predetermined second threshold value, the second determination portion 52 determines that there is a detection target in contact with or close to the second detection area. On the other hand, when the difference between the voltage of the second electric signal output from the second output portion 51 and the second reference value is equal to or less than the second threshold value, the second determination portion 52 determines that there is no detection target in contact with or close to the second detection area. The second threshold value only needs to be set based on the difference between the voltage of the second electric signal in a case where the detection target is not in contact with or close to the second detection area and the voltage of the second electric signal in a case where the detection target is in contact with or close to the second detection area.

The second determination portion 52 notifies the control portion 16 of the determination result as to whether or not there is a detection target in contact with or close to the second detection area. The control portion 16 determines whether or not a touch operation is being performed on the operation surface 34A based on the determination result notified from the second determination portion 52.

The second update portion 53 updates the second reference value based on the second electric signal output from the second output portion 51.

For example, the second update portion 53 updates the second reference value when instructed by the control portion 16 to update the second reference value. For example, the control portion 16 instructs the second control IC 35 to update the second reference value at a timing when no touch operation is being performed on the touch key 34, such as at the time of activation of the image forming apparatus 1.

For example, the second update portion 53 updates the second reference value based on the second electric signal output from the second output portion 51 immediately after being instructed by the control portion 16 to update the second reference value. For example, the second update portion 53 sets the voltage of the second electric signal as the second reference value to be updated to.

Incidentally, in the operation display portion 17, the first electric signal output from the first output portion 41 may change due to an influence of electric noise. When the first electric signal changes, detection accuracy of a touch operation on the display surface 31A by the control portion 16 is lowered. For example, in the operation display portion 17, when the voltage of the first electric signal increases due to the influence of electric noise, detection sensitivity of a touch operation increases, and thus erroneous detection of a touch operation is more likely to occur.

In contrast, the image forming apparatus 1 can suppress lowering of the detection accuracy of a touch operation due to noise, as will be described below.

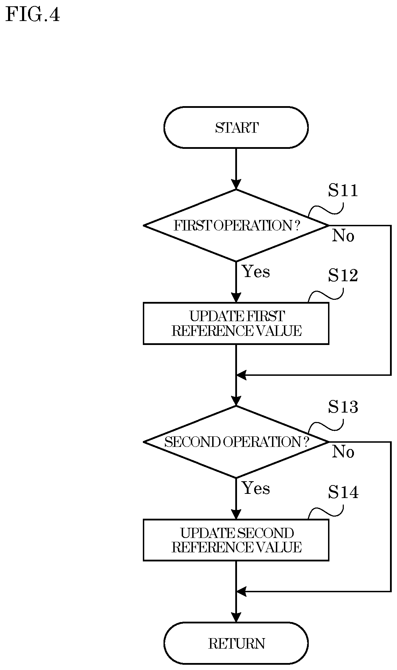

Specifically, a reference value update program for causing the CPU 21 of the control portion 16 to execute reference value update processing (see the flowchart shown in Fig. 4) to be described later is stored in advance in the ROM 22 of the control portion 16. It is noted that the reference value update program may be recorded on a computer-readable recording medium such as a CD, a DVD, or a flash memory and read from the recording medium to be installed in the storage portion 15.

Further, the control portion 16 includes a first detection processing portion 61, a first update processing portion 62, a second detection processing portion 63, and a second update processing portion 64 that are shown in Fig. 2. Specifically, the control portion 16 executes the reference value update program stored in the ROM 22 using the CPU 21. This causes the control portion 16 to function as the respective processing portions described above. A device including the control portion 16 and the operation display portion 17 is an example of a display input device according to the present disclosure.

It is noted that some or all of the processing portions included in the control portion 16 may be constituted of an electronic circuit. Moreover, the reference value update program may alternatively be a program for causing a plurality of processors to function as the respective processing portions shown in Fig. 2.

The first detection processing portion 61 detects a predetermined first operation that is different from an operation on the display surface 31A. The first detection processing portion 61 is an example of a first detection portion according to the present disclosure.

For example, the first operation includes an operation on the operation surface 34A.

For example, the first operation is a touch operation on the operation surface 34A that exceeds a predetermined third time period and is equal to or less than a fourth time period that longer than the third time period. That is, the first operation is an operation of bringing the detection target into contact with or close to the operation surface 34A for a time period that exceeds the third time period and is equal to or less than the fourth time period. For example, the third time period is 0.1 seconds. Further, the fourth time period is 3 seconds.

For example, when the second determination portion 52 determines that there is a detection target in contact with or close to the second detection area, the first detection processing portion 61 measures a duration of the touch operation on the operation surface 34A based on the determination results periodically input from the second determination portion 52. Then, the first detection processing portion 61 determines whether or not the operation performed on the operation surface 34A is the first operation based on the measurement result of the duration of the touch operation.

It is noted that the first operation may be an operation on a mechanical key provided outside the display surface 31A.

The first update processing portion 62 causes the first update portion 43 to update the first reference value when the first operation is detected by the first detection processing portion 61. In other words, the first update portion 43 updates the first reference value when the first operation is detected by the first detection processing portion 61.

Specifically, when the first detection processing portion 61 detects the first operation, the first update processing portion 62 instructs the first control IC 33 to update the first reference value.

The second detection processing portion 63 detects a second operation on the operation surface 34A that is different from the first operation. The second detection processing portion 63 is an example of a second detection portion according to the present disclosure.

For example, the second operation includes a touch operation on the operation surface 34A that exceeds a predetermined first time period. The first time period is longer than the fourth time period. In other words, the second operation includes an operation of bringing the detection target into contact with or close to the operation surface 34A for a time period that exceeds the first time period. For example, the first time period is 10 seconds.

Furthermore, the second operation includes a touch operation on the operation surface 34A that is repeated at an interval shorter than a predetermined second time period. The second time period is a time period shorter than the third time period. For example, the second time period is 0.01 seconds.

For example, when the second determination portion 52 determines that there is a detection target in contact with or close to the second detection area, the second detection processing portion 63 measures a duration of the touch operation on the operation surface 34A based on the determination results periodically input from the second determination portion 52. Then, the second detection processing portion 63 determines whether or not the operation performed on the operation surface 34A is the second operation based on the measurement result of the duration of the touch operation.

The second update processing portion 64 causes the second update portion 53 to update the second reference value when the second operation is detected by the second detection processing portion 63. In other words, the second update portion 53 updates the second reference value when the second operation is detected by the second detection processing portion 63.

Specifically, when the second detection processing portion 63 detects the second operation, the second update processing portion 64 instructs the second control IC 35 to update the second reference value.

### [Reference value update processing]

Hereinafter, with reference to Fig. 4, an update method according to the present disclosure will be described along with exemplary procedures of the reference value update processing executed by the control portion 16 in the image forming apparatus 1. Here, Step S11, Step S12, ... represent numbers of processing procedures (steps) executed by the control portion 16.

### <Step S11>

First, in Step S11, the control portion 16 determines whether or not the first operation has been detected. The processing of detecting the first operation is an example of detecting according to the present disclosure and is executed by the first detection processing portion 61 of the control portion 16.

Specifically, when the second determination portion 52 determines that there is a detection target in contact with or close to the second detection area, the control portion 16 measures a duration of the touch operation on the operation surface 34A based on the determination results periodically input from the second determination portion 52. Then, the control portion 16 determines whether or not the operation performed on the operation surface 34A is the first operation based on the measurement result of the duration of the touch operation.

Here, when determining that the first operation has been detected (Yes in S11), the control portion 16 shifts the processing to Step S12. On the other hand, when determining that the first operation has not been detected (No in S11), the control portion 16 shifts the processing to Step S13.

### <Step S12>

In Step S12, the control portion 16 causes the first update portion 43 to update the first reference value.

Specifically, the control portion 16 instructs the first control IC 33 to update the first reference value. Thus, the first update portion 43 updates the first reference value based on the first electric signal output from the first output portion 41 immediately after being instructed by the control portion 16 to update the first reference value. The processing by the first update portion 43 in response to the instruction from the control portion 16 is an example of updating according to the present disclosure.

### <Step S13>

In Step S13, the control portion 16 determines whether or not the second operation has been detected. The processing of detecting the second operation is performed by the second detection processing portion 63 of the control portion 16.

Specifically, when the second determination portion 52 determines that there is a detection target in contact with or close to the second detection area, the control portion 16 measures a duration of the touch operation on the operation surface 34A based on the determination results periodically input from the second determination portion 52. Then, the control portion 16 determines whether or not the operation performed on the operation surface 34A is the second operation based on the measurement result of the duration of the touch operation.

Here, when determining that the second operation has been detected (Yes in S13), the control portion 16 shifts the processing to Step S14. On the other hand, when determining that the second operation has not been detected (No in S13), the control portion 16 shifts the processing to Step S11.

<Step S14> In Step S14, the control portion 16 causes the second update portion 53 to update the second reference value.

Specifically, the control portion 16 instructs the second control IC 35 to update the second reference value. Thus, the second update portion 53 updates the second reference value based on the second electric signal output from the second output portion 51 immediately after being instructed by the control portion 16 to update the second reference value.

In this manner, in the image forming apparatus 1, the first reference value is updated in accordance with the first operation. Thus, when the detection accuracy of a touch operation on the touch panel 32 is lowered due to the influence of electric noise, the user of the image forming apparatus 1 can perform the first operation to update the first reference value based on the first electric signal that has been influenced by the noise. In other words, it is possible to cancel the influence of noise. Therefore, it is possible to suppress lowering of the detection accuracy of a touch operation due to noise.

Furthermore, the image forming apparatus 1 is provided with the capacitance-type touch key 34 instead of a mechanical key. Thus, it is possible to make the configuration of the operation display portion 17 compact.

Furthermore, in the image forming apparatus 1, the second reference value is updated in accordance with the detection of the second operation. Thus, when the detection accuracy of a touch operation on the touch key 34 is lowered due to the influence of electric noise, the user of the image forming apparatus 1 can perform the second operation to cancel the influence of the noise.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A display input device, comprising:
a first output portion (41) which outputs a first electric signal corresponding to a capacitance of a first detection area included in a first operation surface (31A);
a first determination portion (42) which determines whether or not there is a detection target in contact with or close to the first detection area based on the first electric signal output from the first output portion (41) and a predetermined first reference value;
a first detection portion (61) which detects a predetermined first operation different from an operation on the first operation surface (31A); and
a first update portion (43) which updates, when the first operation is detected by the first detection portion (61), the first reference value based on the first electric signal output from the first output portion (41).

2. The display input device according to claim 1, comprising:
a second output portion (51) which outputs a second electric signal corresponding to a capacitance of a second detection area included in a second operation surface (34A) different from the first operation surface (31A); and
a second determination portion (52) which determines whether or not there is the detection target in contact with or close to the second detection area based on the second electric signal output from the second output portion (51) and a predetermined second reference value, wherein
the first operation includes an operation on the second operation surface (34A).

3. The display input device according to claim 2, comprising:
a second detection portion (63) which detects a second operation on the second operation surface (34A) different from the first operation; and
a second update portion (53) which updates, when the second operation is detected by the second detection portion (63), the second reference value based on the second electric signal output from the second output portion (51).

4. The display input device according to claim 3, wherein
the second operation includes a touch operation on the second operation surface (34A) that exceeds a predetermined first time period.

5. The display input device according to claim 3 or 4, wherein
the second operation includes a touch operation on the second operation surface (34A) that is repeated at an interval shorter than a predetermined second time period.

6. An image processing apparatus (1), comprising:
the display input device according to any one of claim 1 to 5; and
one or both of an image reading portion (12) which reads image data of a document sheet and an image forming portion (13) which forms an image that is based on image data.

7. An update method executed in a display input device including a first output portion (41) which outputs a first electric signal corresponding to a capacitance of a first detection area included in a first operation surface (31A), and a first determination portion (42) which determines whether or not there is a detection target in contact with or close to the first detection area based on the first electric signal output from the first output portion (41) and a predetermined first reference value, the update method comprising:
detecting a predetermined first operation different from an operation on the first operation surface (31A); and
updating, when the first operation is detected, the first reference value based on the first electric signal output from the first output portion (41).
